# EUROPEAN PATENT APPLICATION

(11) **EP 4 810 540 A1**
(43) Date of publication of application: **23.09.2026**
(21) Application number: 25165274.9
(22) Date of filing: 21.03.2025
(51) Int. Cl.: C08G 69/26, C08G 69/36, C08L 77/06

(54) **BIOBASED ALIPHATIC POLYAMIDE COMPRISING UNITS DERIVED FROM 1,9-NONANEDIAMINE**

(71) Applicant: Syensqo Specialty Polymers USA, LLC, Alpharetta, GA 30005-3914 (US)
(72) Inventor: MONDSCHEIN, Ryan, ALPHARETTA (Georgia), 30005-3914 (US); JEOL, Stéphane, 69190 Saint-Fons (FR); MUSHENHEIM, Peter, ALPHARETTA (Georgia), 30005-3914 (US)
(74) Representative: Senninger, Thierry

(57) **Abstract**

The invention relates to an aliphatic polyamide (PA) comprising at least 30.0 mol% of 9X recurring units formed from the condensation of 1,9-nonanediamine (C9) and one or more dicarboxylic acids (DI) of formula HOOC-X-COOH, this proportion in mol% being relative to the total amount of recurring units in the polyamide (PA), wherein X designates -(CH₂)ₓ-where x is an integer varying from 4 to 18 or Cy and comprising (i) end-groups of formula -NH₂ and/or -COOH and (ii) end-groups of formula (I) -C(=O)-NR₁-(CH₂)ₓ-NR₂R₃, where x is an integer of from 1 to 10; R₁, R₂ and R₃ are H or CH₃, respectively and at least one of R₁, R₂ and R₃ is CH₃, the proportion of 9X recurring units being based on the total amount of recurring units in the polyamide (PA).

## Description

### [TECHNICAL FIELD]

The present invention relates to an aliphatic polyamide (PA) comprising units derived from 1,9-nonanediamine (C9), to a polyamide composition (PC) comprising said polyamide (PA) and to a process of preparation of said polyamide (PA).

### [BACKGROUND ART]

CN 102701991 describes a process of preparation of 1,9-nonanediamine.

### [Technical Problem]

A polyamide designates a family of polymers that is used as an engineering plastic for a very wide range of applications. A composition based on a polyamide is of significant commercial interest and may be used to produce automobile or electrical components, generally by injection molding, in view of weight reduction, ease in assembling parts and also its design flexibility.

Notably, the polyamides as represented by polyamide 6 (PA6) and polyamide 66 (PA66) have been widely used for various industrial uses, particularly as engineering plastics. Due to relatively low thermal stability mainly originated from their vulnerability to water absorption, however, there has been increasing demand for the development of a polyamide having better thermal stability and dimensional stability without compromising with other performances such as mechanical properties.

Biobased polymers are more and more sought after.

The polyamide of the invention aims at solving this technical problem.

### [GENERAL DEFINITIONS]

These definitions apply to the present disclosure.

wt.% is a percentage by weight. Mol.% is a percentage by mole.

Unless otherwise stated, the proportions of recurring units in the polyamide are given in mol% and relative to the total proportion of recurring units in the polyamide.

When numerical ranges are given herein, unless otherwise expressly indicated, the end-points of the ranges (even inthe open-ended ranges such as those comprising *"at least"*, *"at most"*, *"lower than"*, *"up to"*, etc or in ranges comprising *"between*") are included. The expression *"at least"* therefore corresponds to the mathematical symbol ≥ in the context of the present invention. For clarity then, the ranges comprising the expression *"between X and Y"* are thus equivalent to *"from X to Y".*

In the present application, unless otherwise indicated, any specific embodiment or technical feature relating to a subject-matter is applicable to another embodiment or technical feature of the same subject-matter or to another subject-matter.

The proportions of diamines in the diamine component (A) are based on the total amount of primary diamines in the diamine component (A). The proportions of carboxylic diacids in the dicarboxylic acid component (B) are based on the total amount of dicarboxylic acids in the dicarboxylic acid component (B).

A primary diamine is a compound of formula H₂N-R-NH₂ where R is a divalent organic radical.

The proportions of recurring units in polyamide (PA) are expressed in mol% and are based on the total amount of recurring units in the polyamide (PA).

As used herein, the terminology '(Cₙ-Cₘ)' in reference to an organic group, such as an alkyl, wherein n and m are integers, respectively, indicates that the group may contain from n carbon atoms to m carbon atoms per group, n and m being included.

A hydrocarbon group is an organic group comprising only atoms of carbon and atoms of hydrogen.

A semi-crystalline polyamide is a polyamide which exhibits a heat of fusion (Hm) of at least 5.0 Joules per gram (J/g) measured by differential scanning calorimetry (DSC) according to ASTM D3418 at a heating rate of 20° C/min. An amorphous polyamide is a polyamide which exhibits a heat of fusion of less than 5.0 J/g, preferably of less than 3.0 J/g, and more preferably of less than 2.0 J/g as measured using DSC according to ASTM D3418 at a heating rate of 20 °C/min.

A dicarboxylic acid is an organic compound containing only two carboxyl groups (-COOH). It is typically represented by formula HOOC-R-COOH where R is a divalent radical.

Cy designates 1,3- and/or 1,4-cyclohexylene.

The recurring units of polyamide (PA) are linked to one another by amide bonds.

The term *"aliphatic polyamide"* in the context of the present invention is a polyamide wherein at least 95.0 mol%, preferably at least 98.0 mol%, preferably at least 99.0 mol% of its recurring units are of formula -C(=O)-Alk-NH- (J) and/or - C(=O)-Alk-C(=O)-NH-Alk'-NH- (J') where Alk and Alk' are alkylene groups. These recurring units are linked to one another by amide bonds.

A linear Cₓ alkylene groups is a divalent group of formula -(CH₂)ₓ-.

### [SUMMARY]

The invention is set out in the appended claims.

The invention relates to a polyamide (PA) according to any one of claims 1-12.

The invention also relates to the process of preparation of polyamide (PA) as defined in claim 13.

The invention also relates to a polymer composition (PC) as defined in claim 14.

Details and precisions about all these subject-matters are now given below.

### [FIGURES]

**Fig. 1/2****:** chromatogram (Liquid Chromatography) of the bio-based 1,9-diaminononane used in the Experimental Section;
**Fig. 2/2****:** spectrum (mass spectroscopy) of the impurity identified at t=9.66 min.

### [DETAILED DESCRIPTION OF THE INVENTION]

### Polyamide (PA)

A first aspect of the present invention is directed to an aliphatic polyamide (PA) comprising at least 30.0 mol% of 9X recurring units formed from the condensation of 1,9-nonanediamine (C9) and one or more dicarboxylic acids (DI) of formula HOOC-X-COOH, this proportion in mol% being relative to the total amount of recurring units in the polyamide (PA), wherein X designates -(CH₂)ₓ- where x is an integer varying from 2 to 18 or Cy where Cy designates 1,3- and/or 1,4-cyclohexylene,
characterized in that polyamide (PA) comprises:
(i) end-groups of formula -NH₂ and/or -COOH; and
(ii) (ii) end-groups of formula (I) -C(=O)-NR₁-(CH₂)ₓ-NR₂R₃, where x is an integer of from 1 to 10; R₁, R₂ and R₃ are H or CH₃, respectively and at least one of R₁, R₂ and R₃ is CH₃.

9X recurring units are formed from the condensation of 1,9-nonanediamine (C9) and the one or more dicarboxylic acids (DI).

The proportion of 9X units is at least 30.0 mol%. This proportion is more particularly at least 50.0 mol%, preferably at least 95.0 mol%. This proportion is typically between 50.0 mol% and 100 mol%. For the sake of clarity, as several dicarboxylic acids (DI) may be used as monomers of polyamide (PA), the proportions of units 9X given herein correspond to the total proportions of the 9X units even if more than one acids (DI) are used. Thus, for a copolyamide 9.X1/9.X2 derived from the condensation of C9 diamine with two distinct dicarboxylic acids X1 and X2 of respective formulae HOOC-(CH₂)ₓ₁-COOH and HOOC-(CH₂)ₓ₂-COOH with x1 and x2 being integers with x1 ≠ x2 and both varying from 2 to 18, the proportions given takes account of the total proportions of 9.X1 and 9.X2 units.

Dicarboxylic acid (DI) is more particularly selected in the group consisting of glutaric acid, adipic acid, suberic acid, azelaic acid, sebacic acid, undecanedioic acid (C11), dodecanedioic acid (C12), tridecanedioic acid (C13), tetradecanedioic acid (C14), pentadecanedioic acid (C15), hexadecanedioic acid (C16), heptadecanedioic acid (C17), octadecanedioic acid (C18) and combination thereof. DI may be any one of the dicarboxylic acid disclosed in the Experimental Section.

According to an embodiment, the recurring units of polyamide (PA) consist essentially or consist of 9X units. The expression *"consist essentially"* in relation to the recurring units means that the recurring units of polyamide (PA) consist of the 9X units and up to 2.0 mol%, preferably up to 1.5 mol%, preferably up to 1.0 mol%, preferably up to 0.5 mol% of recurring units distinct from 9X units.

According to an embodiment, the 9X units are selected in the group consisting of 9.5; 9.6; 9.7; 9.8; 9.9; 9.10; 9.12; 9.18; 9.C units and combination thereof. C designates 1,3- and/or 1,4-dicyclohexane carboxylic acid.

### Recurring units (R_{PA}*)

According to an embodiment, polyamide (PA) comprises recurring units 9X and recurring units (R_{PA}*) selected in the group of (i) the recurring units (AB) derived from the condensation of a diamine and a dicarboxylic acid; (ii) from at least one lactam; (iii) from at least one aminoacid and combination thereof, where the recurring units 9X and recurring units (AB) are formed from the condensation of a diamine component (A) comprising all the primary diamines of polyamide (PA) and a dicarboxylic acid component (B) comprising all the dicarboxylic acids of polyamide (PA) and wherein:
▪ the diamine component (A) consists of 1,9-nonanediamine (C9) and optionally at least one diamine of formula NH₂-A-NH₂ distinct from 1,9-nonanediamine where A is a C₆-C₁₆ divalent radical;
▪ the dicarboxylic acid component (B) consists of dicarboxylic acid(s) (DI) and optionally at least one dicarboxylic acid HOOC-B-COOH which is not a dicarboxylic acid (DI) where B is a C₆-C₁₆ divalent radical.

Polyamide (PA) may comprise recurring units derived from at least one lactam, such as lauryl lactam. Lauryl lactam provides recurring units (R_{PA}*) of formula - NH-(CH₂)₁₂-C(=O)-.

Polyamide (PA) may comprise recurring units derived from at least one aminoacid, such as 11-aminoundecanoic acid. 11-aminoundecanoic acid provides recurring units (R_{PA}*) of formula -NH-(CH₂)₁₁-C(=O)-.

According to an embodiment, polyamide (PA) comprises recurring units 9X and recurring units (R_{PA}*) selected in the group of the recurring units (AB) derived from the condensation of a diamine and a dicarboxylic acid, where the recurring units 9X and recurring units (AB) are formed from the condensation of a diamine component (A) and a dicarboxylic acid component (B) wherein:
▪ the diamine component (A) consists of 1,9-nonanediamine (C9) and optionally at least one diamine NH₂-A-NH₂ distinct from 1,9-nonanediamine where A is a C₆-C₁₆ divalent radical;the dicarboxylic acid component (B) consists of dicarboxylic acid(s) (DI) and optionally at least one dicarboxylic acid HOOC-B-COOH which is not a dicarboxylic acid (DI) where B is a C₆-C₁₆ divalent radical.

According to an embodiment, the recurring units of polyamide (PA) consist of recurring units 9X and recurring units (R_{PA}*) as described herein.

According to an embodiment, the diamine NH₂-A-NH₂ distinct from 1,9-nonanediamine is selected in the group consisting of aliphatic diamines of formula NH₂-(C₆-C₁₆)-Alk-NH₂ where Alk designates an alkylene group different from - (CH₂)₉-; m-xylylene diamine; p-xylylene diamine; bis-(4-amino-3-methylcyclohexyl)-methane (MACM); bis-(4-amino-cyclohexyl)-methane (PACM); bis-(4-amino-3-ethyl-cyclohexyl)methane (EACM); bis-(4-amino-3,5-dimethyl-cyclohexyl)-methane (TMDC); 2,6-norbomane diamine; 2,6-bis-(aminomethyl)-norbornane; 1,3-diaminocyclohexane; 1,4-diaminocyclohexane diamine, isophorone diamine; 1,3-bis-(aminomethyl)cyclohexane (1,3-BAC) and 1,4-bis-(aminomethyl)cyclohexane (1,4-BAC).

According to an embodiment, the diamine NH₂-A-NH₂ distinct from 1,9-nonanediamine is selected in the group consisting of aliphatic diamines of formula NH₂-(C₆-C₁₆)-Alk-NH₂ where Alk designates an alkylene group different from - (CH₂)₉-;1,3-BAC; 1,4-BAC; MACM; PACM; IPDA; MXDA and PXDA which are the diamines of respectively formula: 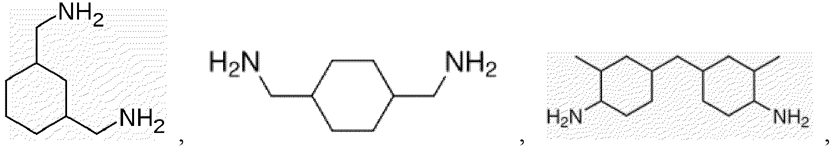 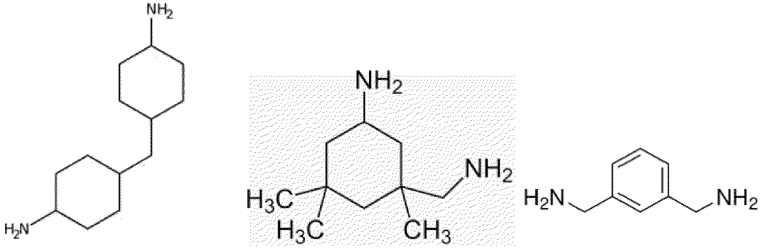 and

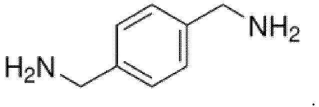

According to an embodiment, the aliphatic diamine NH₂-A-NH₂ distinct from 1,9-nonanediamine is selected in the group consisting of diamines of formula NH₂-(C₆-C₁₆)-Alk-NH₂ where Alk designates an alkylene group different from -(CH₂)₉-.

Aliphatic diamine NH₂-A-NH₂ is more particularly selected in the group consisting of 1,4-butane diamine, 1,5-pentane diamine, 2-methyl-1,5-pentane diamine, 2-butyl-2-ethyl-1,5-pentane diamine, 1,6-hexane diamine, 2,2,4-trimethylhexamethylene diamine, 2,4,4-trimethylhexamethylene diamine, 1,8-octane diamine, 2-methyl-1,8-octane diamine, 1,10-decane diamine, 1,11-undecane diamine, 1,12-dodecane diamine, 1,13-tridecane diamine, 1,14-tetradecane diamine and combination thereof.

According to an embodiment, the carboxylic diacid HOOC-B-COOH is selected in the group consisting of aliphatic dicarboxylic acids of formula HOOC-(C₄-C₃₆)-Alk-COOH where Alk designates a (C₄-C₃₆)-alkylene group different from - (CH₂)ₓ- x being an integer from 2 to 18, isophthalic acid, terephthalic acid, 2,5-pyridinedicarboxylic acid, 2,4-pyridinedicarboxylic acid, 3,5-pyridinedicarboxylic acid, 2,2-bis(4-carboxyphenyl) propane, bis(4-carboxyphenyl) methane, 2,2-bis(4-carboxyphenyl) hexafluoropropane, 2,2-bis(4-carboxyphenyl) ketone, 4,4'-bis(4-carboxyphenyl) sulfone, 2,2-bis(3-carboxyphenyl) propane, bis(3-carboxyphenyl) methane, 2,2-bis(3-carboxyphenyl) hexafluoropropane, 2,2-bis(3-carboxyphenyl) ketone, bis(3-carboxyphenoxy) benzene, naphthalene dicarboxylic acids (including 2,6-naphthalene dicarboxylic acid, 2,7-naphthalene dicarboxylic acid, 1,4-naphtalene dicarboxylic acid, 2,3-naphtalene dicarboxylic acid, 1,8-naphthalene dicarboxylic acid) and combination thereof.

According to an embodiment, the dicarboxylic acid HOOC-B-COOH distinct from dicarboxylic acid (DI) is selected in the group consisting of aliphatic dicarboxylic acids of formula HOOC-(C₄-C₃₆)-Alk-COOH where Alk designates an alkylene group different from -(CH₂)ₓ-, x being an integer from 2 to 18.

According to an embodiment, the recurring units of polyamide (PA) consist of recurring units 9X and optionally recurring units (R_{PA}*).

### End-groups of polyamide (PA)

Polyamide (PA) comprises (i) end-groups of formula -NH₂ and/or -COOH and (ii) end-groups of formula (III) -C(=O)-NR₃-(CH₂)ₓ-NR₄R₅, where x is an integer of from 1 to 10; R₃, R₄ and R₅ are H or CH₃, respectively and at least one of R₃, R₄ and R₅ is CH₃.

The end-groups of formula (I) stem from the presence of at least one diamine (DA) of formula (II) NHR₃-(CH₂)ₓ-NR₄R₅ in the reaction mixture (RM) which is used for preparing polyamide (PA).

According to an embodiment, R₃ = H and R₄ & R₅ = CH₃.

According to another embodiment, R₃, R₄, R₅ = CH₃.

x is more particularly an integer from 6 to 10. x may take any value between 1 and 10 or between 6 and 10.

According to an embodiment, the proportion of end-groups of formula (I) is ≤ 50.0 µeq/g. This total proportion is typically at least 0.10 µeq/g, more particularly at least 0.50 µeq/g, more particularly at least 1.00 µeq/g. This total proportion is typically between 0.10 µeq/g and 50.0 µeq/g or between 0.10 µeq/g and 20.0 µeq/g or between 0.10 µeq/g and 15.0 µeq/g.

For clarity, polyamide (PA) may comprise end-groups according to formula (III) and different by variable x and/or substituents R₃, R₄, R₅. For instance, the following amide end-groups could be present in polyamide (PA): -C(=O)-NMe-(CH₂)₉-NHMe and -C(=O)-NH-(CH₂)₉-NMe₂. The proportion of end-groups of formula (III) described herein therefore corresponds to the total proportion of end-groups of formula (III).

The end-groups of polyamide (PA) preferably consist essentially of or consist of:
- (i) end-groups of formula -NH₂ and/or -COOH;
- (ii) the end-groups of formula (III) -C(=O)-NR₃-(CH₂)ₓ-NR₄R₅ as disclosed herein; and
- (iii) optionally amide end-groups of formula -NH-C(=O)-G or -C(=O)-NH-G different from -C(=O)-NR₃-(CH₂)ₓ-NR₄R₅ and where G is a C₁-C₁₆ hydrocarbon group, preferably a C₁-C₁₂ hydrocarbon group, preferably a C₁-C₇ hydrocarbon group.

The composition of polyamide (PA), the proportions of recurring units and end-groups in the polyamide (PA) can be determined by ¹H NMR spectroscopy. They can also be determined after digestion (hydrolysis) of the polyamide (PA) and analysis of the mixture resulting from said digestion. The analysis is performed by the usual analytical techniques available to the skilled person. Gas chromatography (GC) and/or liquid chromatography (LC) can conveniently be used for this analysis.

The hydrolysis of the polyamide is preferably performed in acidic conditions: the sample of polyamide is mixed with a strong acid and the mixture is heated at a temperature higher than 150°C until digestion is complete. The resulting mixture is then cooled to room temperature, diluted with a solvent and the obtained mixture is analyzed by at least one analytical method.

The proportion of end-groups -NH₂ and -COOH can also be determined by titration.

The conditions of the digestion provided in the Experimental Section can be used.

### Thermal properties of the polyamide (PA)

Polyamide (PA) may be amorphous or semi-crystalline.

In another embodiment, the polyamide (PA) has a glass transition temperature (Tg), as measured according to ASTM D3418, of at least 15°C, preferably at least 60°C, preferably at least 70°C, more preferably at least 80°C, and/or of at most 150°C, preferably at most 200°C, more preferably at most 180°C. In a particular embodiment, the polyamide (PA) has a glass transition temperature (Tg), as measured according to ASTM D3418, of from 60°C to 160°C, preferably from 70°C to 140°C, more preferably from 80°C to 130°C.

In one embodiment, the polyamide exhibits a heat of fusion (Hm) of at least 5.0 J/g, preferably at least 7.0 J/g, more preferably at least 10.0 J/g, and/or of at most 100.0 J/g, preferably at most 90.0 J/g, more preferably at most 80.0 J/g. The heat of fusion is generally measured according to ASDM D3418. The method disclosed in the Examples may more particularly be followed.

Polyamide (PA) preferably exhibits a melting temperature (Tm) of at least 150°C, Tm being measured by DSC according to ASTM D3418.

T_{g} and Tₘ may more preferably be measured with the method disclosed in the Experimental Section.

### Preparation of polyamide (PA)

A second aspect of the present invention is directed to a method of preparation of polyamide (PA).

Polyamide (PA) is prepared by heating a reaction mixture (RM) comprising, consisting essentially of or consisting of:
(a) a monomer mixture (MM) consisting of all the monomers constituting polyamide (PA);
(b) at least one diamine (DA) of formula (II) NHR₃-(CH₂)ₓ-NR₄R₅ where x, R₃-R₅ are as defined herein;
(c) optionally a catalyst, notably selected in the group of phosphorous based compounds;
(d) optionally water;
(e) optionally at least one end-capping agent selected in the group consisting of end-capping agents of formula G-COOH, G-NH₂ and combination thereof, G being as disclosed herein.

### Components (a) and (b)

The monomer mixture (MM) consists of all the monomers constituting the polyamide (PA). Thus, the monomer mixture (MM) consists of the diamines of a diamine component (A), the dicarboxylic acids of a dicarboxylic acid component
(B) and if any, the aminoacid(s) and/or the lactam(s).

In the reaction mixture (RM), the molar ratio [-COOH] from the dicarboxylic acids of the dicarboxylic acid component (B) and from the aminoacid(s) (if any) / [-NH₂] from the diamines of the diamine component (A) and from the aminoacid(s) (if any) is preferably from 0.9 to 1.1, preferably from 0.95 to 1.07, more preferably 1.00 to 1.05.

The diamine component (A) comprises 1,9-nonanediamine (C9) of formula ₂HN-(CH₂)₉-NH₂. This diamine 1,9-nonanediamine (C9) is preferably biobased. The term *'bio-based'* means in relation to a substance X that this substance X contains carbon of renewable origin, derived from living or once-living organisms, excluding materials embedded in geological formations and/or fossilized, for instance petroleum-based ones. The diamine C9 preferably exhibits a biocontent of at least 95.0%, preferably at least 99.0%, preferably at least 99.9%, the biocontent being expressed as the % of organic carbon of renewable origin measured according to ASTM D6866-22. As a consequence, polyamide (PA) preferably exhibits the bio content of at least 6.0%, the biocontent being expressed as the % of organic carbon of renewable origin measured according to ASTM D6866-22.

Reaction mixture (RM) also contains at least one diamine (DA) of formula (II) NHR₃-(CH₂)ₓ-NR₄R₅. The proportion of diamine(s) (DA) is between 0.01 and 2.50 mol%, this proportion being expressed relative to the content of 1,9-nonanediamine (C9). This molar proportion can be calculated by the following formula: NHR₃-(CH₂)ₓ-NR₄R₅ / 1,9-nonanediamine x100. This proportion may be determined according to classical analytical techniques, such as GC (Gas Chromatography) - QTOF (Quadrupole Time-Of-Flight). For the avoidance of doubt, several diamines (DA) according to formula (II) may be present and the proportion provided herein is then determined by reference to all diamines (DA) present. The conditions of the Experimental Section may be followed for the determination of the proportion of diamine(s) (DA).

Diamine (DA) acts as a capping agent (see also below).

### Component (c)

The reaction mixture (RM) may also comprise a catalyst, notably selected in the group of phosphorous based compounds. The catalyst may more particularly be selected in the group consisting of phosphoric acid, phosphorous acid, hypophosphorous acid, sodium hypophosphite, sodium hypophosphate and sodium hypophosphinate, preferably phosphorous acid and/or sodium hypophosphite. In a preferred embodiment, the phosphorous compound is phosphorous acid.

### Component (d)

The reaction mixture (RM) may also comprise water. The proportion of water in the reaction mixture (RM) is typically at most 50.0 wt%, preferably a most 30.0 wt%. The function of water is to decrease the viscosity of the reaction mixture (RM).

### Component (e)

The reaction mixture (RM) may also contain at least one end-capping agent selected in the group consisting of end-capping agents of formula G-COOH, G-NH₂ and combination thereof, G being as disclosed herein.

An example of end-capping agent of formula G-COOH is a monocarboxylic acid G-COOH, such as acetic acid.

The reaction mixture (RM) is heated at a temperature which is high enough to induce the creation of amide bonds through the polycondensation. The temperature at which the reaction mixture (RM) is heated is at least 200°C. This temperature is typically at least Tg + 50°C and/or at least Tm + 20°C, Tg and Tₘ being respectively the glass transition temperature and the melting temperature of polyamide (PA).

The conditions provided in the Experimental Section can be followed to prepare the polyamide (PA) of the invention.

### Polymer composition (PC)

A third aspect of the present invention is directed to a polymer composition (PC).

The polymer composition (PC) comprises:
(a) from 30.0 to 100 wt% of at least one polyamide (PA) as disclosed herein;
(b) from 0 to 70.0 wt% of at least one reinforcing agent (RA); and
(c) from 0 to 30.0 wt% of at least one additive (Add) different from reinforcing agent (RA), wt% being relative to the total weight of the polymer composition (PC).

Component (b) is generally blended with component (a). Likewise, component (c) is generally blended with components (a) and (b).

The components (a)-(b)-(c) are generally blended together.

The reinforcing agent (RA) is notably selected from the group consisting of mineral fillers (e.g. talc, mica, kaolin, calcium carbonate, calcium silicate, magnesium carbonate), glass fibers, carbon fibers, synthetic polymeric fibers, aramid fibers, aluminum fibers, titanium fibers, magnesium fibers, boron carbide fibers, rock wool fibers, steel fibers, natural fibers (e.g. linen, hemp or cellulose), wollastonite, glass balls (e.g. hollow glass microspheres), glass flakes and any combination of two or more thereof.

The reinforcing agent (RA) may be any one of the reinforcing agents listed herein. Carbon fibers and/or glass fibers are most advantageously used in the polyamide composition of the present invention.

According to an embodiment, the proportion of RA is at least 1.0 wt%, preferably at least 5.0 wt%, preferably at least 10.0 wt% and/or of at most 50.0 wt%, preferably at most 45.0 wt%, more preferably at most 40.0 wt%, based upon the total weight of the polymer composition (PC).

The polymer additive (Add) is notably selected from the group consisting of plasticizers, colorants, pigments, antistatic agents, dyes, nucleating agents, antioxidants, polymer processing aids, anti-blocking additive, slip additives, antifogging additives, chemical blowing agents, nucleating agent, and any combination thereof.

The proportion of the additive(s) is typically at least 0.1 wt% and/or at most 25.0 wt%, more preferably at most 20.0 wt%, most preferably at most 15.0 wt%, based upon the total weight of the polymer composition (PC).

The polymer composition (PC) is prepared by a compounding method comprising a step in which the polymer(s) of the polymer composition (PC) is/are melted and mixed, possibly with the other components of the polymer composition (PC). Any equipment generally used for compounding may be used such as a melt mixer, such as a single screw extruder or a twin screw extruder; a single screw or twin screw kneader or a Banbury mixer. The compounding method may conveniently be performed with an extruder such as a single screw extruder or a twin screw extruder.

### Articles and applications

A fourth aspect of the present invention is directed to an article or a composite made of or comprising the polyamide (PA) or the polyamide composition (PC).

A fifth aspect of the present invention is directed to the use of polymer (PA) notably as defined in the claims or polymer composition (PC) notably as defined in the claims for the preparation of a composite.

In one embodiment, the article or the composite is used as an electrical component, an automotive component, a food-contact component, a medical device component, a plumbing component, an oil and gas component or an aerospace component.

### [EXPERIMENTAL SECTION]

The invention will now be described with reference to the following examples, whose purpose is merely illustrative and not intended to limit the scope of the invention.

The raw materials used for the preparation of the polyamides are provided below:

| **Name** | **Alias** | **RN CAS** | **Supplier** |
|---|---|---|---|
| biobased 1,9-diaminononane ₂HN-(CH₂)₉-NH₂ | NMDA or C9 | 646-24-2 | Solvay USA (prepared from oleic acid) |
| Glutaric acid | C5 | 110-94-1 | Sigma Aldrich |
| Adipic acid | C6 or AA | 124-04-9 | Ascend Performance Materials |
| Pimelic acid | C7 | 111-16-0 | Alfa Aesar |
| Suberic acid | C8 | 505-48-6 | Sigma Aldrich |
| Azelaic acid | C9 | 123-99-9 | Thermo Fisher Scientific |
| Sebacic acid | C10 | 111-20-6 | Sigma Aldrich |
| Dodecanedioic acid | C12 | 693-23-2 | Sigma Aldrich |
| Octadecanedioic acid | C18 | 871-70-5 | Wilmar Oleo NA |
| 1,4-cyclohexanedicarboxylic acid | CHDA or C | 1076-97-7 | Eastman |
| phosphorus acid | | | Sigma Aldrich |
| antifoam DF 210 F | | | Momentive |

The bio-based 1,9-diaminononane used was prepared from oleic acid.

### Detection of diamine DA of formula R₃HN-(CH₂)ₓ-NR₄R₅ in the biobased 1,9-diaminononane (C9)

The 1,9-diaminononane (C9) as received contains at least one diamine (DA) of formula *R₃HN-(CH₂)ₓ-NR₄R₅.* This can be detected via GC (Gas Chromatography) - QTOF (Quadrupole Time-Of-Flight) using an Agilent 7890B instrument equipped with a capillary column (VF35 ms, 30m x 0.25 mm x 0.25µm) and an Agilent QTOF 7200B detector. MS (Mass Spectroscopy) detection was accomplished via electron ionization (70 eV) and chemical ionization (methane and ammonia). Scans were performed from 45 amu to 650 amu. The oven temperature program consisted of an initial 50°C hold for 1 min, a ramp at 20°C/min to 325°C, and a hold at 325°C for 10 min. The injector temperature was set to 280°C. Measurements were performed in split mode using helium as the carrier gas. Subsequently, the concentrations of the molecules present were quantified via GC-FID (Flame Ionization Detection) using an Agilent 7890A instrument equipped with the column and a FID detector. The same oven temperature program was utilized. Measurements were performed in split mode using helium as the carrier gas.

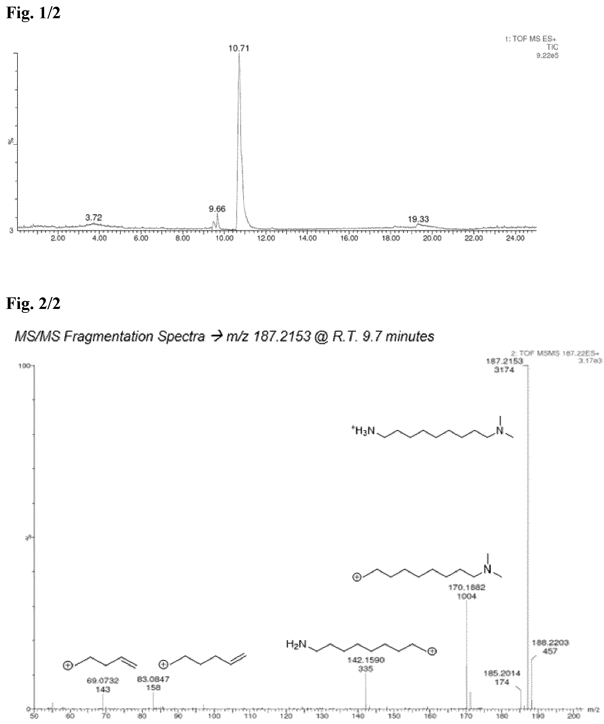

In the bio-based 1,9-diaminonane used, 0.047 mol% of a diamine (DA) of formula (II) having empirical formula of C₁₁H₂₆N₂ was measured. The MS/MS fragmentation spectrum of the species at retention time of 9.66 min as provided in Fig. 1/2 makes it possible to identify the structure of said species (NH₂-(CH₂)₉-NMe₂) present in the biobased C9 as received. The two other monomers listed in the Table below did not make it possible to detect the diamine (DA) of formula (II) with the used analytical technique.

| **monomer** | **diamine (DA) of formula (II)** | **proportion (mol%)** |
|---|---|---|
| biobased C9 | yes | 0.047 mol% |
| 1,9-diaminononane from Thermo Scientific | no | / |
| mixture of 1,9-diaminononane and 2-methyl-1,8-octanediamine (MODA) | no | / |

| | | |
|---|---|---|
| see ref#11381487 in catalog of ThermoScientific (https://www.fishersci.fr/shop/products/1-9-diaminononane-98-thermoscientific/11381487) | | |

### Preparation of polyamides

Polyamide E5 was prepared in an autoclave reactor equipped with a distillate line fitted with a pressure control valve. E5 was prepared by charging into the reactor 5.64 g of bio-based 1,9-diaminononane, 6.45 g of azelaic acid, 5.76 g of deionized water, and 0.0040 g of phosphorous acid. The reactor was sealed, purged with N₂ gas and heated to 132°C and held for 39 min, followed by heating to 193°C and holding for 31 min, followed by heating to 236°C and holding for 35 min, followed by heating to 277°C and holding for 35 min. The steam generated was slowly released to keep the internal pressure under 250 psig. After the previous step, the reactor pressure was slowly reduced to atmospheric pressure over 25 min. The temperature increased to 309°C. After holding for an additional 30 min with N₂ gas purging, the reactor was cooled to room temperature and the polyamide (10.43 g) as produced was retrieved from the reactor.

**Table 1** below shows the aliphatic polyamides according to the invention prepared according to the same recipe.

**Table 1**

| **Ex.** | **Polyamide (PA)** | **end-groups of formula (I) (µeq/g)** | ***T*g °C** | ***T*m °C** | **Hm J/g** |
|---|---|---|---|---|---|
| E1 | 9.5 | | ND | 217 | 76.7 |
| E2 | 9.6 | 2.98 | 60 | 234 | 75.5 |
| E3 | 9.7 | 2.83 | ND | 206 | 61.8 |
| E4 | 9.8 | | ND | 214 | 73.4 |
| E5 | 9.9 | 2.58 | ND | 195 | 65.3 |
| E6 | 9.10 | | ND | 203 | 79.2 |
| E7 | 9.12 | | ND | 194 | 85.3 |
| E8 | 9.18 | | ND | 172.4 | 74.9 |
| E8 | 9.C | | 122 | 308 | 54.8 |

### Test methods & Results

- **Melting point (Tₘ), glass transition temperature (T_{g}) and enthalpy of melting (Hₘ) (ASTM D3418):** T_{g}, Tₘ, and Hₘ were measured by Differential Scanning Calorimetry ("DSC") according to ASTM D3418 using a heating and cooling rate of 20 °C/min. Three scans were used for each DSC test: a first heat up to 350°C, followed by a first cool down to 30°C, followed by a second heat up to 360°C. The Tg and the Tm were determined from the second heat up.
- **Intrinsic Viscosity (IV)** was measured according to ASTM D789, using a mixture of phenol and 1,1,2,2-tetrachloroethane (60:40 wt/wt) as a solvent.

**Table 2**

| **Properties** | **Tₘ (°C)** | **T_{g} (°C)** | **Hₘ (J/g)** | **IV (dL/g)** | **Bio-C Content (%)** |
|---|---|---|---|---|---|
| **PA9,9** | 195 | | 65.3 | 0.91 | |
| **PA9,10** | 203 | | 79.2 | 0.86 | 100 |

### Digestion of polyamide and determination of the composition of the polyamide

The hydrolysis of the polyamide (PA) is performed in acidic conditions: mix the weighed sample (40-50 mg) with a strong acid (0.5 mL of HBr, 48 wt% in water) in an hydrolysis tube and after purging O₂ with vacuum and adding N₂ (cycle vacuum / N₂: 3 times) heat the mixture at a temperature higher than 150°C (160°C) until digestion is complete (generally, a duration of at least 4 hours is needed). Then cool to room temperature. The mixture is diluted with a solvent (mixture acetonitrile/water with vol. ratio 2/1) and the obtained mixture is analyzed by LC-MS.

Conditions for LC-MS: column Atlantis Premier BEH Z-HILIC (2.1 mm x 100 mm x 1.7); mobile phase A: 25 mM ammonium formate, pH = 3.4; mobile phase B: acetonitrile; temperature of the column: 50°C; flow rate: 0.250 mL/min; injection volume: 2 µL; gradient as shown below:

| time (min) | %A | %B |
|---|---|---|
| initial | 5 | 95 |
| 10 | 25 | 75 |
| 16 | 50 | 50 |
| 18 | 50 | 50 |
| 19 | 5 | 95 |
| 25 | 5 | 95 |

## Claims

1. Aliphatic polyamide (PA) comprising at least 30.0 mol% of 9X recurring units formed from the condensation of 1,9-nonanediamine (C9) and one or more dicarboxylic acids (DI) of formula HOOC-X-COOH, this proportion in mol% being relative to the total amount of recurring units in the polyamide (PA), wherein X designates -(CH₂)ₓ- where x is an integer varying from 2 to 18 or Cy where Cy designates 1,3- and/or 1,4-cyclohexylene, **characterized in that** polyamide (PA) comprises (i) end-groups of formula -NH₂ and/or - COOH and (ii) end-groups of formula (I) -C(=O)-NR₁-(CH₂)ₓ-NR₂R₃, where x is an integer of from 1 to 10; R₁, R₂ and R₃ are H or CH₃, respectively and at least one of R₁, R₂ and R₃ is CH₃.

2. Polyamide (PA) according to claim 1, wherein the total proportion of 9X recurring units is:
- at least 50.0 mol%, or
- at least 95.0 mol%.

3. Polyamide (PA) according to claim 1 or 2, where dicarboxylic acid (DI) is selected in the group consisting glutaric acid, adipic acid, pimelic acid, suberic acid, azelaic acid, sebacic acid, undecane diacid, dodecane diacid, tridecane diacid, tetradecane diacid, pentadecane diacid, hexadecane diacid, heptadecane diacid, octadecane diacid, 1,4-cyclohexanedicarboxylic acid and combination thereof.

4. Polyamide (PA) according to any one of the preceding claims, where the 9X units are selected in the group consisting of 9.5; 9.6; 9.7; 9.8; 9.9; 9.10; 9.12; 9.18; 9.C units and combination thereof where C designates 1,3- and/or 1,4-dicyclohexane carboxylic acid.

5. Polyamide (PA) according to any one of the preceding claims, where the recurring units of polyamide (PA) consist essentially or consist of 9X units.

6. Polyamide (PA) according to any one of claims 1-4, comprising recurring units 9X and recurring units (R_{PA*}) selected in the group of (i) the recurring units (AB) derived from the condensation of a diamine and a dicarboxylic acid; (ii) from a lactam; (iii) from an aminoacid and combination thereof, where the recurring units 9X and recurring units (AB) are formed from the condensation of a diamine component (A) comprising all the primary diamines of polyamide (PA) and a dicarboxylic acid component (B) comprising all the dicarboxylic acids of polyamide (PA) and wherein:
▪ the diamine component (A) consists of 1,9-nonanediamine (C9) and optionally at least one diamine of formula NH₂-A-NH₂ distinct from 1,9-nonanediamine where A is a C₆-C₁₆ divalent radical;
▪ the dicarboxylic acid component (B) consists of dicarboxylic acid(s) (DI) and optionally at least one dicarboxylic acid HOOC-B-COOH which is not a dicarboxylic acid (DI) where B is a C₆-C₁₆ divalent radical.

7. Polyamide (PA) according to any one of the preceding claims, comprising recurring units 9X and recurring units (R_{PA}*) selected in the group of the recurring units (AB) derived from the condensation of a diamine and a dicarboxylic acid, where the recurring units 9X and recurring units (AB) are formed from the condensation of a diamine component (A) comprising all the primary diamines of polyamide (PA) and a dicarboxylic acid component (B) comprising all the dicarboxylic acids of polyamide (PA), where
- the diamine component (A) consists of 1,9-nonanediamine (C9) and optionally at least one diamine NH₂-A-NH₂ distinct from 1,9-nonanediamine where A is a C₆-C₁₆ divalent radical;
- the dicarboxylic acid component (B) consists of dicarboxylic acid(s) (DI) and optionally at least one dicarboxylic acid HOOC-B-COOH which is not a dicarboxylic acid (DI) where B is a C₆-C₁₆ divalent radical.

8. Polyamide (PA) according to claim 6 or 7, wherein the recurring units of polyamide (PA) consist of recurring units 9X and recurring units (R_{PA}*).

9. Polyamide (PA) according to any one of the preceding claims, wherein R₃ = H and R₄ & R₅ = CH₃ or R₃, R₄, R₅ = CH₃.

10. Polyamide (PA) according to any one of the preceding claims, wherein the end-groups of the polyamide (PA) consist of:
- end-groups of formula -NH₂ and/or -COOH;
- the end-groups of formula (III) -C(=O)-NR₃-(CH₂)ₓ-NR₄R₅ as disclosed herein; and
- optionally amide end-groups of formula -NH-C(=O)-G or -C(=O)-NH-G different from NR₃-(CH₂)ₓ-NR₄R₅ and where G is a C₁-C₁₆ organic moiety, preferably a C₁-C₁₂ organic moiety.

11. Polyamide (PA) according to any one of the preceding claims, wherein the diamine C9 exhibits a biocontent of at least 95.0%, preferably at least 99.0%, preferably at least 99.9%, the biocontent being expressed as the % of organic carbon of renewable origin measured according to ASTM D6866-22.

12. Polyamide (PA) according to any one of the preceding claims, wherein the polyamide (PA) exhibits a bio content of at least 6.0%, the biocontent being expressed as the % of organic carbon of renewable origin measured according to ASTM D6866-22.

13. Polyamide (PA) according to any one of the preceding claims, wherein the proportion of end-groups of formula (I) is ≤ 50.0 µeq/g and/or at least 0.10 µeq/g, more particularly at least 0.50 µeq/g, more particularly at least 1.00 µeq/g.

14. Process of preparation of a polyamide (PA) as disclosed in any one of claims 1-13, comprising heating a reaction mixture (RM) comprising or consisting of:
(a) the monomer mixture (MM) consisting of 1,9-nonanediamine (C9) and all the other monomers constituting the polyamide;
(b) at least one diamine (DA) of formula (II) NHR₃-(CH₂)ₓ-NR₄R₅;
(c) optionally a catalyst, notably selected in the group of phosphorous based compounds;
(d) optionally water;
(e) optionally at least one end-capping agent selected in the group consisting of end-capping agents of formula G-COOH, G-NH₂ and combination thereof, G being a C₁-C₁₆ hydrocarbon group, preferably a C₁-C₁₂ hydrocarbon group, preferably a C₁-C₇ hydrocarbon group;
wherein the proportion of diamine(s) (DA) is between 0.01 and 2.50 mol%, this proportion being expressed relative to the content of 1,9-nonanediamine (C9).

15. Polymer composition (PC) comprising:
(a) from 30.0 to 100 wt% of at least one polyamide (PA) as disclosed in any one of claims 1-13;
(b) from 0 to 70.0 wt% of at least one reinforcing agent (RA); and
(c) from 0 to 30.0 wt% of at least one additive (Add) different from reinforcing agent (RA), notably selected from the group consisting of plasticizers, colorants, pigments, antistatic agents, dyes, nucleating agents, antioxidants, polymer processing aids, anti-blocking additive, slip additives, antifogging additives, chemical blowing agents, nucleating agent, and any combination thereof;
these proportions in wt% being relative to the total weight of the polymer composition (PC).
